# EUROPEAN PATENT APPLICATION

(11) **EP 4 779 941 A1**
(43) Date of publication of application: **22.07.2026**
(21) Application number: 24866838.6
(22) Date of filing: 19.04.2024
(51) Int. Cl.: H04L 41/0803

(54) **DATA SENDING METHOD, AND COMMUNICATION APPARATUS AND SYSTEM, AND STORAGE MEDIUM**

(30) Priority: 21.09.2023 CN 202311230613
(71) Applicant: ZTE Corporation, Shenzhen, Guangdong 518057 (CN)
(72) Inventor: PENG, Zirui, Shenzhen, Guangdong 518057 (CN); ZHANG, Chenchen, Shenzhen, Guangdong 518057 (CN); XU, Jing, Shenzhen, Guangdong 518057 (CN); RUI, Hua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/088824
(87) International publication number: WO 2025/060414

(57) **Abstract**

Provided are a data sending method, and a communication apparatus and system, and a storage medium. The data sending method comprises: acquiring a data service task; and sending channel-associated processing signaling to a target node, wherein the target node is a data service node for executing the data service task, and the channel-associated processing signaling is used for indicating the routing and data service capabilities of the target node to process the data service task.

## Description

The present disclosure claims priority to Chinese Patent Application No. 202311230613.X, filed on September 21, 2023, which is hereby incorporated by reference in its entirety.

### TECHNICAL FIELD

The present disclosure relates to the technical field of communications, and in particular, to a data sending method, a communication apparatus, a communication system, and a storage medium.

### BACKGROUND

In the current network, the data plane can be separated from the user plane, and the data plane can forward and process data other than user plane data. Specifically, a data orchestrator (DO) and a data agent (DA) are arranged in the data plane. The DO is used to orchestrate data service tasks, and the DA is used to process the data service tasks.

### SUMMARY

In an aspect, a data sending method is provided. The data sending method includes: acquiring a data service task; and sending channel-associated processing signaling to target nodes. The target nodes are data service nodes that perform the data service task, and the channel-associated processing signaling is used to indicate routing and data service capabilities of the target nodes for processing the data service task.

In another aspect, a data sending method is provided. The data sending method includes: receiving channel-associated processing signaling, the channel-associated processing signaling being used to indicate routing and data service capabilities of a target node for processing a data service task; and processing the data service task based on the routing and data service capabilities for processing the data service task indicated by the channel-associated processing signaling.

In yet another aspect, a communication apparatus is provided. The communication apparatus includes: a communication unit and a processing unit. The processing unit is configured to instruct the communication unit to acquire a data service task. The processing unit is further configured to instruct the communication unit to send channel-associated processing signaling to target nodes. The target nodes are data service nodes that perform the data service task, and the channel-associated processing signaling is used to indicate routing and data service capabilities of the target nodes for processing the data service task.

In yet another aspect, a communication apparatus is provided. The communication apparatus includes a communication unit and a processing unit. The communication unit is configured to receive channel-associated processing signaling, the channel-associated processing signaling being used to indicate routing and data service capabilities of a target node for processing a data service task. The processing unit is configured to process the data service task based on the routing and data service capabilities for processing the data service task indicated by the channel-associated processing signaling.

In yet another aspect, a communication apparatus is provided. The communication apparatus includes a memory and a processor. The memory is coupled to the processor. The memory is configured to store a computer program. The processor, when executing the computer program, implements the data sending method described in any one of the above aspects.

In yet another aspect, a communication system is provided. The communication system includes a data orchestration node and a target node. The data orchestration node is configured to: acquire a data service task; and send channel-associated processing signaling to a target node. The target node is a data service node that performs the data service task, and the channel-associated processing signaling is used to indicate routing and data service capabilities of the target node for processing the data service task. The target node is configured to: receive the channel-associated processing signaling; and process the data service task based on the routing and data service capabilities for processing the data service task indicated by the channel-associated processing signaling.

In yet another aspect, a computer-readable storage medium is provided. The computer-readable storage medium has stored computer program instructions thereon, and the computer program instructions, when being executed by a processor, implement the data sending method described in any one of the above aspects.

In yet another aspect, a computer program product is provided. The computer program product includes computer program instructions, and the computer program instructions, when being executed by a processor, implement the data sending method described in any one of the above aspects.

### BRIEF DESCRIPTION OF THE DRAWINGS

FIG. 1 is a system architecture diagram of a communication system, in accordance with some embodiments of the present disclosure.
FIG. 2 is a schematic diagram showing a data orchestration node and a data service node interacting to process a data service task, in accordance with some embodiments of the present disclosure.
FIG. 3 is a schematic flow diagram of a data sending method, in accordance with some embodiments of the present disclosure.
FIG. 4 is a schematic flow diagram of another data sending method, in accordance with some embodiments of the present disclosure.
FIG. 5 is a schematic diagram of a process of sending channel-associated processing signaling and processing data packets in a unicast issuance scenario of channel-associated processing signaling, in accordance with some embodiments of the present disclosure.
FIG. 6 is a schematic flow diagram of yet another data sending method, in accordance with some embodiments of the present disclosure.
FIG. 7 is a schematic diagram of a process of sending channel-associated processing signaling and processing data packets in a channel-associated issuance scenario of channel-associated processing signaling, in accordance with some embodiments of the present disclosure.
FIG. 8 is a schematic flow diagram of yet another data sending method, in accordance with some embodiments of the present disclosure.
FIG. 9 is a schematic diagram of a process of sending channel-associated processing signaling and processing data packets in a hybrid issuance scenario of channel-associated processing signaling, in accordance with some embodiments of the present disclosure.
FIG. 10 is a schematic flow diagram of yet another data sending method, in accordance with some embodiments of the present disclosure.
FIG. 11 is a schematic flow diagram of yet another data sending method, in accordance with some embodiments of the present disclosure.
FIG. 12 is a schematic flow diagram of yet another data sending method, in accordance with some embodiments of the present disclosure.
FIG. 13 is a schematic flow diagram of yet another data sending method, in accordance with some embodiments of the present disclosure.
FIG. 14 is a structural schematic diagram of a communication apparatus, in accordance with some embodiments of the present disclosure.
FIG. 15 is a structural schematic diagram of another communication apparatus, in accordance with some embodiments of the present disclosure.
FIG. 16 is a schematic diagram showing a hardware structure of a communication apparatus, in accordance with some embodiments of the present disclosure.

### DETAILED DESCRIPTION

In order to enable those skilled in the art to better understand the technical solutions in the embodiments of the present disclosure, the technical solutions in the present disclosure will be described clearly and completely with reference to the accompanying drawings of the present disclosure. However, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

It should be noted that in the present disclosure, the words such as "exemplary (exemplarily)" or "for example (such as, e.g.)", etc., are used to represent examples, explanations, or illustrations. Any embodiment or design solution described with "exemplary (exemplarily)" or "for example (such as, e.g.)", etc., in the present disclosure should not be interpreted as being more preferred or advantageous than other embodiments or design solutions. Specifically, the use of the words such as "exemplary (exemplarily)" or "for example (such as, e.g.)", etc., is intended to present related concepts in some manners.

Hereinafter, terms such as "first" and "second" are used for descriptive purposes only, and are not to be construed as indicating or implying a relative importance or implicitly indicating the number of indicated technical features. Thus, features defined with "first" or "second" may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent three cases: only A, only B, and both A and B. Additionally, "at least one" means one or more, and "multiple/plurality of" means two or more.

With the continuous development of the communication network, in addition to transmitting user plane data, the communication network also needs to forward and process non-user plane data such as network data, Internet of Things (IoT) data, and artificial intelligence (AI) data.

In the current 5^{th} generation mobile communication technology (5G) communication network, data forwarding and data processing are mainly implemented through a user plane function (UPF) deployed at the network edge. Specifically, the UPF network element receives business flow instructions issued by a session management function (SMF) to perform functions such as packet routing and forwarding, data packet inspection, data flow quality of service (QoS) processing, and traffic usage reporting.

In the 5G network, by deploying the UPF at the network edge, devices closer to the network edge may participate in data processing and computation, reducing the burden on the core network. Furthermore, since data processing and computation are performed by devices closer to the network element edge, the latency of data processing and computation may be reduced, enabling the 5G network to support low-latency, high-bandwidth businesses.

However, in the 5G network, only limited data forwarding functions are deployed at the edge, making unified edge orchestration impossible. Furthermore, UPF cannot separate network data from user data, only implements point-to-point connections at the user plane, and fails to support arbitrary topologies caused by data distribution and aggregation during data channel-associated analysis for different service data.

To solve the above issues, in the current network, the data plane can be separated from the user plane, and the data plane can forward and process data other than user plane data. Specifically, a DO and a DA are arranged in a data plane of a 6^{th} generation mobile communication technology (6G) network. The DO is used to orchestrate data service tasks, and the DA is used to process the data service tasks. In some embodiments, a trust anchor agent (TAA) and a data storage function (DSF) are also be arranged in the data plane. The DSF is a storage plugin for the DA, and is used to store data. The TAA is a security plane proxy on the data plane, and is used to provide security mechanisms for the data plane to ensure the confidentiality, integrity and reliability of data.

However, the specific processes for processing and forwarding data service tasks based on capabilities of DO and capabilities of DA are not currently provided at present. Therefore, how to process and forward data service tasks based on the capabilities of DO and the capabilities of DA is an urgent technical problem to be solved currently.

To solve the above technical problems, embodiments of the present disclosure provide a data sending method. After a data orchestration node acquires a data service task, the data orchestration node sends channel-associated processing signaling to a target node that performs the data service task, so that the target node processes the data service task based on routing and data service capabilities for processing the data service task indicated by the channel-associated processing signaling. Based on this, in the embodiments of the present disclosure, the data service task can be processed and forwarded based on capabilities of the data orchestration node and the target node.

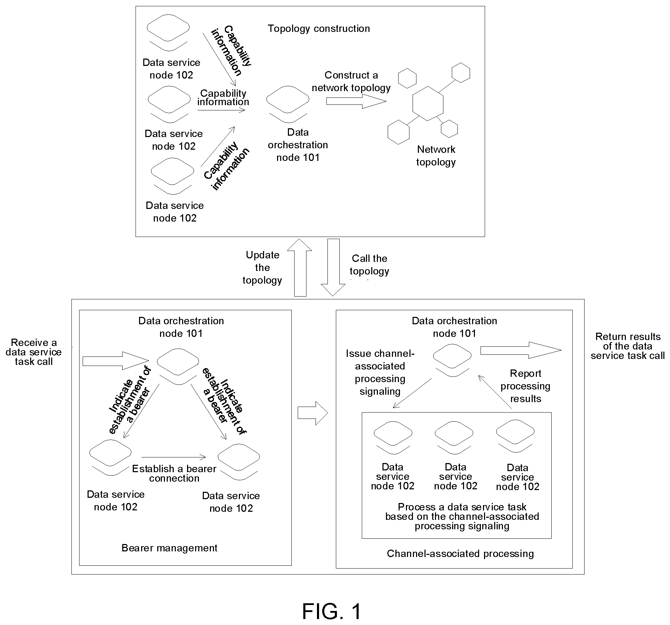

The data sending method provided in the embodiments of the present disclosure may be applied to the communication system shown in FIGS. 1. As shown in FIG. 1, the communication system includes a data orchestration node 101 and at least one data service node 102.

The data orchestration node 101 is mainly used to implement functions of topology construction, bearer management, and channel-associated processing signaling issuance.

The data service node 102 is used to report node capabilities, establish a bearer based on orchestration of the data orchestration node, and process a data service task based on the channel-associated processing signaling issued by the data orchestration node.

The topology construction refers to a process by which the data orchestration node 101 constructs a network topology, including: the data orchestration node 101 acquiring data service capabilities and bearer information of data service nodes 102 in the entire network, and constructing a network topology based on the data service capabilities and bearer information of the data service nodes. The network topology is used to indicate connection relationships between all nodes, as well as the data service capabilities of all nodes.

The bearer management refers to a management by which the data orchestration node 101 establishes and closes bearers between all nodes, including: after receiving a data service task call, the data orchestration node 101 orchestrating a data service logic of the data service task based on the data service capabilities required by the data service task and the network topology of the network (where the data service logic is used to indicate an order in which all data service nodes in the network process the data service task, as well as the data service capabilities required to process the data service task). The data orchestration node 101 determines data service nodes that need to interact when processing the data service task based on the data service logic, establishes bearers between the data service nodes that need to interact, and closes the bearers after the data service task is completed.

The channel-associated processing signaling issuance refers to a process by which the data orchestration node 101, after generating the channel-associated processing signaling corresponding to the data service task, issues the channel-associated processing signaling to the data service node, including: the data orchestration node 101 determining a plurality of target nodes that need to process the data service task, an order in which the plurality of target nodes process the data service task, and data processing capabilities of each target node for processing the data service task. Based on the above information, the data orchestration node 101 generates channel-associated processing signaling for each target node and sends corresponding the channel-associated processing signaling to the target node (where the channel-associated processing signaling is used to indicate routing and the data service capabilities of the target node for processing the data service task). In this way, the target node can process and forward the data service task based on the channel-associated processing signaling, so that the data orchestration node 101 and the data service node 102 complete the data service task processing based on their respective capabilities.

It should be noted that, FIG. 1 is only an exemplary framework diagram, and the number of devices and names of all the devices included in FIG. 1 are not limited. In addition to the devices shown in FIG. 1, the communication system may further include other devices, such as a core network device.

In some embodiments, the data orchestration node may be deployed in a core network device or a base station, and the data orchestration node is used to perform DO-related functions. The target node (and the data service node) may be deployed in a core network device, base station, or terminal device, and the target node (and the data service node) is used to perform DA-related functions.

The embodiments of the present disclosure do not limit the application scenarios. The system architecture and business scenarios described in the embodiments of the present disclosure are intended to more clearly illustrate the technical solutions of the embodiments of the present disclosure, and do not constitute a limitation on the technical solutions provided in the embodiments of the present disclosure. A person of ordinary skill in the art will know, with the evolution of network architecture and the emergence of new business scenarios, the technical solutions provided in the embodiments of the present disclosure are also applicable to similar technical problems.

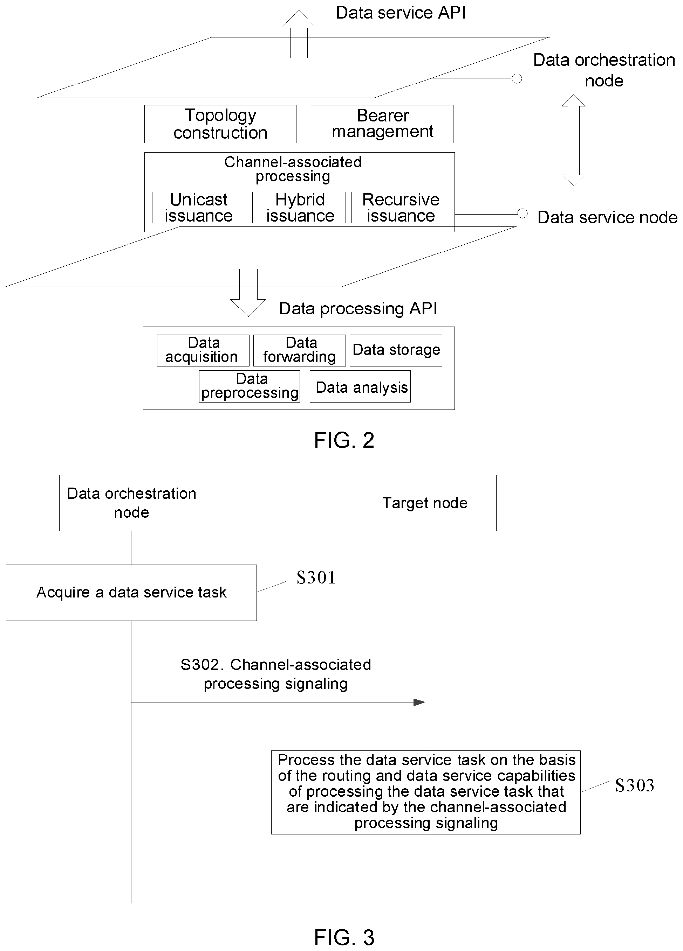

As an example, FIG. 2 shows a process of a data orchestration node and a data service node interacting to process a data service task. As shown in FIG. 2, the data orchestration node establishes a network topology when the data orchestration node initially accesses the network, and updates the network topology under a corresponding condition. The data orchestration node orchestrates a data service task after receiving a data service task call from an upper layer, and manages the data service node based on an orchestrated data service task logic, to establish a bearer between the nodes that process the data service task. After the bearer is established, the data orchestration node sends channel-associated processing signaling to the corresponding data service node. After receiving the channel-associated processing signaling, the data service node monitors data packet(s) of the data service task and processes the data packet(s) based on the channel-associated processing signaling after acquiring the data packet(s) of the data service task.

It should be noted that, in the embodiments of the present disclosure, the manners by which the data orchestration node sends the channel-associated processing signaling to the corresponding data service node include, but is not limited to, unicast issuance, recursive issuance, and hybrid issuance. The manners by which the data service node processes the data packet includes, but are not limited to, data acquisition, data forwarding, data storage, data preprocessing, and data analysis.

FIG. 3 is a schematic flow diagram of a data sending method provided in embodiments of the present disclosure. As shown in FIG. 3, the data sending method includes the following S301 to S303.

In S301, a data orchestration node acquires a data service task.

The data service task refers to a task that requires calling on relevant nodes in a network to provide corresponding data services.

In some embodiments, the data service task acquired by the data orchestration node is a data service task called by an upper layer of the data plane through a data service application programming interface (API). Specifically, the upper layer sends a call request of the data service task to the data orchestration node through the data service API, and the data orchestration node acquires the data service task based on the call request.

It can be understood that, in the embodiments of the present disclosure, the data service task includes data in the data plane other than user plane data, and may also include user data related to the user plane, which will not be limited in the present disclosure.

In S302, the data orchestration node sends channel-associated processing signaling to a target node. Correspondingly, the target node receives the channel-associated processing signaling from the data orchestration node.

The target node is a data service node that performs the data service task. The channel-associated processing signaling is used to indicate routing and data service capabilities of the target node for processing the data service task.

In some implementation manners, the data orchestration node orchestrates the data service task based on the current network topology to determine a data service logic of the data service task. The data orchestration node determines a work of each target node based on a performing order of each target node in the data service logic and data capabilities of each target node in performing the data service task (the work of the target node includes the routing of the target node for processing the data service task and the data service capabilities of the target node for processing the data service task). The data orchestration node generates the channel-associated processing signaling based on the work of the target node and sends the channel-associated processing signaling to the target node.

In some embodiments, the channel-associated processing signaling includes a working field of the corresponding target node. The working field includes, but is not limited to, at least one of the following: a target node identifier, a data source node identifier, a capability identifier, or a data forwarding node identifier.

A data source node is used to indicate previous hop node(s) of the target node, that is, node(s) from which the target node needs to monitor a data packet of the data service task. In a case where there are a plurality of data source nodes, the data source node identifier includes identifiers of the plurality of data source nodes.

The capability identifier is used to indicate which data service capabilities the target node needs to provide to process the data service task.

The data forwarding node identifier is used to indicate next hop node(s) of the target node, that is, node(s) to which the target node needs to forward the processed data packet after completing the data service task. In a case where there are a plurality of data forwarding nodes, the data forwarding node identifier includes identifiers of the plurality of data forwarding nodes.

As an example, the data orchestration node may record the data service task and the data service logic of the data service task into a data service record table. The data service record table includes, but is not limited to, at least one of the following: a data service task serial number, a data service logic identifier, or a data service logic content. The data service logic content includes an identifier of a target node that processes the data service logic, a work of each target node, and an order and routing manner of a plurality of target nodes processing the data service logic. The data service logic in the data service record table may also be replaced by the data service task, which will not be limited in the present disclosure.

In some embodiments, the data service record table may be a chain structure, a tree structure, or a directed graph, which will not be limited in the present disclosure.

It should be noted that the data orchestration node may orchestrate one data service task into one or more data service logics. After the orchestration is completed, the data orchestration node and the data service node may process each data service logic separately, or may process a plurality of data service logics of the data service task simultaneously, which will not be limited in the present disclosure.

In S303, the target node processes the data service task based on the routing and data service capabilities for processing the data service task indicated by the channel-associated processing signaling.

In some embodiments, the processing manner of the target node processing the data service task includes, but is not limited to, data acquisition, data forwarding, data storage, data preprocessing, and data analysis.

It should be noted that in a case where the data sending method provided in the embodiments of the present disclosure is applied to the 6G network, the data orchestration node may be a DO in the network, and the target node (data service node) may be a DA in the network. In addition, the data sending method provided in the embodiments of the present disclosure may also be applied to other types of networks, which will not be limited in the present disclosure.

In the embodiments of the present disclosure, after the data orchestration node acquires the data service task, the data orchestration node sends the channel-associated processing signaling to the target node that performs the data service task, so that the target node processes the data service task based on the routing and data service capabilities for processing the data service task indicated by the channel-associated processing signaling. Based on this, in the embodiments of the present disclosure, the data service task may be processed and forwarded based on capabilities of the data orchestration node and the target node.

It should be noted that, in the embodiments of the present disclosure, the data service task may be a data service task directly called by the upper layer, or may be a data service logic of the data service task obtained after the data orchestration node orchestrates the called data service task, which will not be limited in the present disclosure.

In some embodiments, the channel-associated processing signaling includes first type of channel-associated processing signaling and second type of channel-associated processing signaling.

The first type of channel-associated processing signaling is used to indicate routing and data service capabilities of one target node for processing the data service task.

The second type of channel-associated processing signaling is used to indicate routing and data service capabilities of each target node of a plurality of target nodes for processing the data service task.

The first type of channel-associated processing signaling and the target node are in one-to-one correspondence. Each first type of channel-associated processing signaling is used to indicate routing and data service capabilities of a corresponding target node for processing the data service task. The second type of channel-associated processing signaling corresponds to the data service task (or data service logic), and the second type of channel-associated processing signaling corresponds to all target nodes of the data service task.

Based on different types of channel-associated processing signaling, the embodiments of the present disclosure provide the following different manners for issuing channel-associated processing signaling in different scenarios: scenario 1 of unicast issuance of channel-associated processing signaling; scenario 2 of recursive issuance of channel-associated processing signaling; and scenario 3 of hybrid issuance of channel-associated processing signaling. Next, scenario 1, scenario 2, and scenario 3 will be described.

### Scenario 1: unicast issuance of channel-associated processing signaling

Scenario 1 corresponds to the first type of channel-associated processing signaling mentioned above. In other words, the data orchestration node sends, to each target node, corresponding first type of channel-associated processing signaling via unicast.

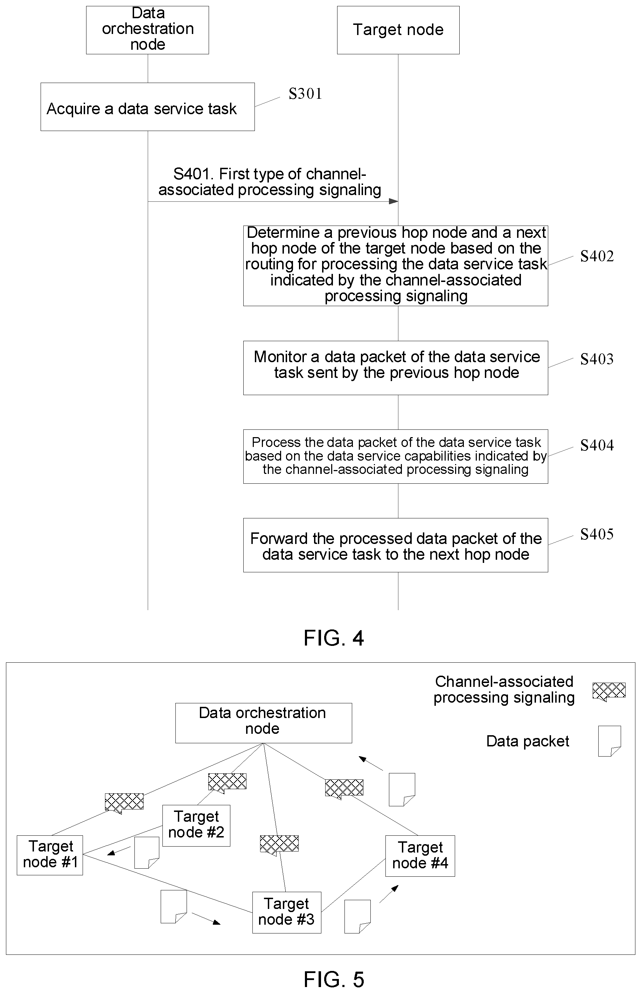

In this scenario, with reference to FIG. 3 and as shown in FIG. 4, the above S302 may be implemented through the following S401.

In S401, the data orchestration node sends the corresponding first type of channel-associated processing signaling to each target node. Correspondingly, each target node receives the first type of channel-associated processing signaling from the data orchestration node.

In some embodiments, the data orchestration node queries the data service record table for the data service task, and determines the target node recorded in the data service logic content of the data service task, as well as the work of the target node. The data orchestration node generates the corresponding first channel-associated processing signaling for each target node based on the work of each target node, and sends the corresponding first channel-associated processing signaling to each target node.

The first type of channel-associated processing signaling includes the working field of the target node and the data service task identifier. In the embodiments of the present disclosure, the data service task identifier may also be replaced with the data service logical identifier.

As an example, as shown in FIG. 5, the target nodes in the network that process the current data service task include: target node #1, target node #2, target node #3, and target node #4. The data orchestration node generates the first type of channel-associated processing signaling for each target node and sends the corresponding first type of channel-associated processing signaling to each target node.

It should be noted that the process of the target node processing the data service task after receiving the channel-associated processing signaling varies in different scenarios, which will be introduced below with reference to some scenarios.

As shown in FIG. 4, in scenario 1, the process of the target node processing the data service task described in S303 above may be implemented through the following S402 to S405.

In S402, the target node determines a previous hop node and a next hop node of the target node based on the routing for processing the data service task indicated by the channel-associated processing signaling.

In some embodiments, the target node parses the channel-associated processing signaling to determine the data service task identifier and the working field. The target node further parses the working field, determines whether the channel-associated processing signaling corresponds to the node based on the target node identifier in the working field, determines the previous hop node of the target node based on the data source node identifier in the working field, determines the next hop node of the target node based on the data forwarding node identifier in the working field, and determines the data processing capabilities that need to be provided for the data service task based on the capability identifier in the working field.

It should be noted that in a case where the target node determines that the channel-associated processing signaling corresponds to the node, the target node will continue to perform the following processes in S403 to S405.

In a case where the target node determines that the channel-associated processing signaling does not correspond to the node, the target node will not continue to perform the following processes in S403 to S405, and will switch to the exception processing procedure.

In S403, the target node monitors a data packet of the data service task sent by the previous hop node.

In scenario 1, the channel-associated processing signaling and the data packet of the data service task are sent separately. The data packet of the data service task includes a data service task identifier (or an identifier of the data service logic). After receiving the data packet, the target node determines whether the identifier in the data packet is the same as the data service task identifier in the channel-associated processing signaling. In a case where the identifier in the data packet is the same as the data service task identifier in the channel-associated processing signaling, the target node determines that the data packet is a data packet of the data service task to be processed by the node.

As shown in FIG. 5, the data orchestration node sends the channel-associated processing signaling to the target nodes, and then sends the data packet of the data service task to target node #1 that processes the data service task first. The target nodes process and forward the data packet of the data service task in sequence.

It should be noted that there may be one or more previous hop nodes of the target node. In a case where the data source node identifier in the working field parsed by the target node includes identifiers of a plurality of data source nodes, the target node determines that all of the plurality of data source nodes are previous hop nodes of the target node. The target node monitors each of a plurality of previous hop nodes until the target node receives a data packet sent by each previous hop node that match the data service task identifier.

In S404, the target node processes the data packet of the data service task based on the data service capabilities indicated by the channel-associated processing signaling.

In some embodiments, the target node determines the data service capabilities for processing the data service task based on the capability identifier in the working field of the channel-associated processing signaling. Then, the target node calls the data service capabilities to process the data packet of the data service task and obtains the processed data packet.

It should be noted that in a case where there are a plurality of previous hop nodes of the target node, the target node processes a data packet of the data service task sent by each previous hop node based on the data service capabilities indicated by the capability identifier in the working field.

In S405, the target node forwards the processed data packet of the data service task to the next hop node.

In some embodiments, the target node adds the identifier of the data service task into the processed data packet and forwards the data packet with the added identifier to the next-hop node.

It should be noted that in a case where there are a plurality of next hop nodes of the target node, the target node performs pruning on the data packet of each next hop node and sends the pruned data packet, including that: the target node removes information of other next hop nodes except for a target next hop node from the processed data packet of the data service task, where the target next hop node is any one node among the plurality of next hop nodes. The target node sends the data packet in which the information of other next hop nodes is removed to the target next hop node.

### Scenario 2: recursive issuance of channel-associated processing signaling

Scenario 2 corresponds to the second type of channel-associated processing signaling mentioned above. In other words, the data orchestration node sends the second type of channel-associated processing signaling to the target node in a recursive issuance manner. The second type of channel-associated processing signaling corresponds to all target nodes that process the data service task.

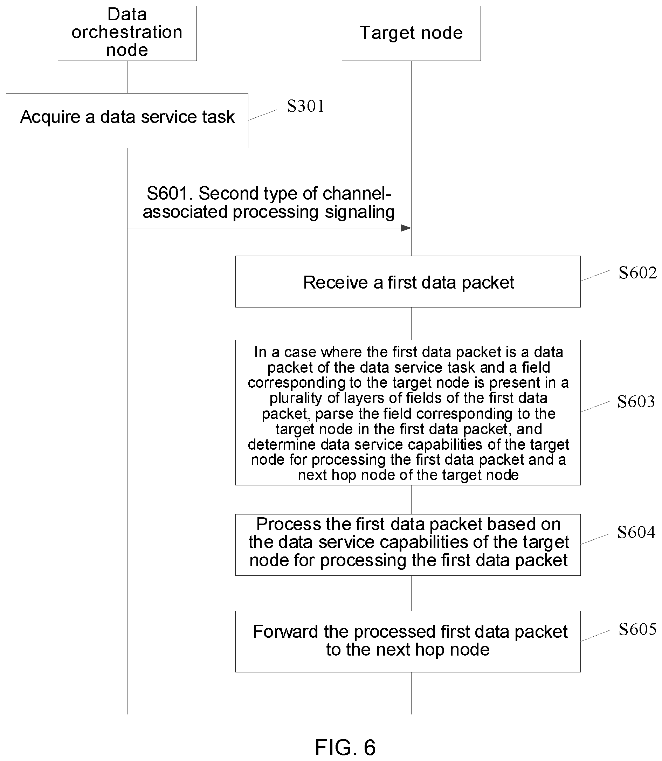

In this scenario, with reference to FIG. 3 and as shown in FIG. 6, the above S302 may be implemented through the following S601.

In S601, the data orchestration node sends the second type of channel-associated processing signaling to a head node among the plurality of target nodes.

The head node is a target node that processes the data service task first. During the implementation, the head node may also be defined as a node without a data source. The head node does not need to monitor data packets from other data service nodes.

In some embodiments, the second type of channel-associated processing signaling is integrated into the data packet of the data service task.

In some other embodiments, the second type of channel-associated processing signaling includes a plurality of layers of fields, where one layer of fields corresponds to one target node, and each layer of fields is used to indicate routing and data service capabilities of a corresponding target node for processing the data service task.

In some embodiments, the data orchestration node queries the data service record table for the data service task, and determines the target node recorded in the data service logic content of the data service task, as well as the work of the target node. The data orchestration node writes the working field of each target node into the data packet based on an order in which the target nodes process the data service task, and each working field is a layer of fields.

The second type of channel-associated processing signaling includes: working fields of all target nodes, and the data service task identifier.

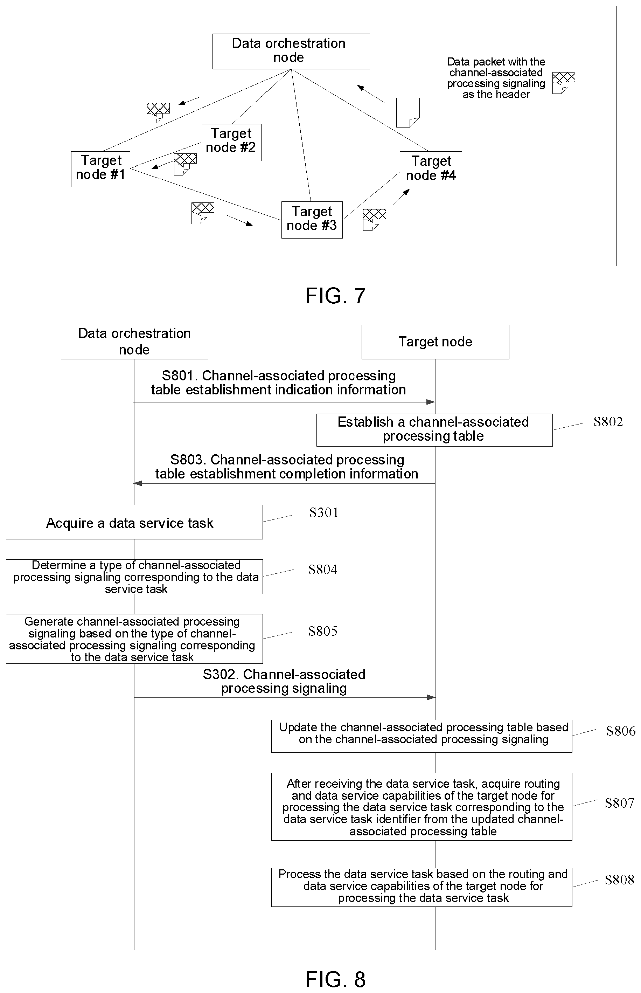

As an example, as shown in FIG. 7, the target nodes in the network that process the current data service task include: target node #1, target node #2, target node #3, and target node #4. The data orchestration node writes working fields of target nodes #1 to #4 into the second type of channel-associated processing signaling and sends a data packet carrying the second channel-associated processing signaling to target node #1 that performs the data service task first.

As shown in FIG. 6, in scenario 2, the process of the target node processing the data service task described in S303 above may be implemented through the following S602 to S605.

In S602, the target node receives a first data packet.

In some embodiments, after receiving the first data packet, the target node determines the data service task identifier in the data packet and parses a first-layer working field of the data packet. The target node determines whether the channel-associated processing signaling corresponds to the node based on the target node identifier in the working field.

In S603, in a case where the first data packet is a data packet of the data service task and a field corresponding to the target node is present in a plurality of layers of fields of the first data packet, the target node parses the field corresponding to the target node in the first data packet, and determines data service capabilities of the target node for processing the first data packet and a next hop node of the target node.

In some embodiments, the target node determines a previous hop node based on the data source node identifier in the working field, determines a next hop node based on the data forwarding node identifier in the working field, and determines data processing capabilities that need to be provided for the data service task based on the capability identifier in the working field.

It should be noted that there may be one or more previous hop nodes of the target node. In a case where the data source node identifier in the working field parsed by the target node includes identifiers of a plurality of data source nodes, the target node determines that all of the plurality of data source nodes are previous hop nodes of the target node. The target node monitors each of a plurality of previous hop nodes until the target node receives a data packet sent by each previous hop node that matches the data service task identifier.

In S604, the target node processes the first data packet based on the data service capabilities of the target node for processing the first data packet.

It should be noted that the implementation manner of S604 is similar to the implementation manner of the above S404, which will not be repeated here.

In some embodiments, the target node removes the field corresponding to the target node from the plurality of layers of fields of the processed first data packet. In this way, the next hop node may directly determine a corresponding working field based on the first layer of fields in the received data packet.

In S605, the target node forwards the processed first data packet to the next hop node.

In some embodiments, in a case where there are a plurality of next hop nodes, the target node performs pruning on the data packet of each next hop node. As for the process of pruning, reference can be made to the above description of S405, and details will not be repeated here.

### Scenario 3: hybrid issuance of channel-associated processing signaling

In scenario 3, the data orchestration node may flexibly choose to send the first type of channel-associated processing signaling and the second type of channel-associated processing signaling, so as to flexibly adapt to the network environments.

In some embodiments, the data orchestration node implements hybrid issuance of channel-associated processing signaling through a channel-associated processing table. With reference to FIG. 3 and as shown in FIG. 8, this process may be implemented through the following S801 to S803.

S801, the data orchestration node sends channel-associated processing table establishment indication information to the target node. Correspondingly, the target node receives the channel-associated processing table establishment indication information from the data orchestration node.

The channel-associated processing table establishment indication information is used to indicate establishment of a channel-associated processing table.

The channel-associated processing table is used by the target node to store, based on the channel-associated processing signaling, at least one of the following: the data service task identifier, a data source of the data service task, or routing and data service capabilities for processing the data service task. The routing and data service capabilities for processing the data service task may be carried in the above-mentioned working field.

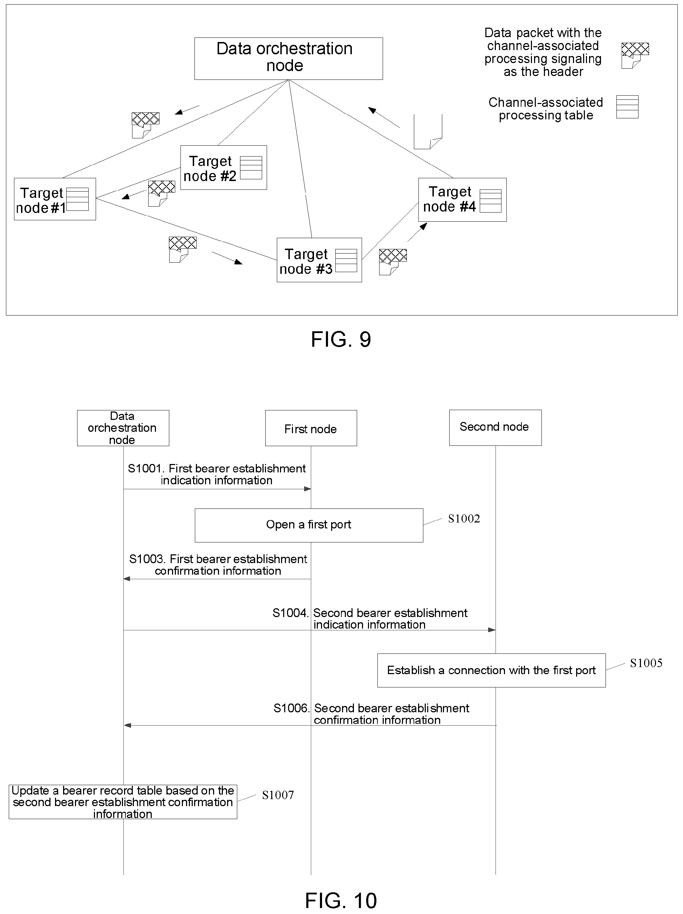

As an example, as shown in FIG. 9, the target nodes in the network include: target node #1, target node #2, target node #3, and target node #4. The data orchestration node sends the channel-associated processing table establishment indication information to the four target nodes, so that the four target nodes each establish a channel-associated processing table.

In S802, the target node establishes the channel-associated processing table in response to the channel-associated processing table establishment indication information.

In S803, the target node sends channel-associated processing table establishment completion information to the data orchestration node. Correspondingly, the data orchestration node receives the channel-associated processing table establishment completion information from the target node.

The channel-associated processing table establishment completion information is used to indicate that the target node has established the channel-associated processing table.

In some embodiments, after the target node has completed the establishment of the channel-associated processing table, the data orchestration node sends the channel-associated processing signaling to the target node. In scenario 3, the data orchestration node may generate different types of channel-associated processing signaling according to needs, which will be described below with reference to S804 and S805.

In S804, the data orchestration node determines a type of channel-associated processing signaling corresponding to the data service task.

In some embodiments, the type of channel-associated processing signaling corresponding to the data service task is determined based on any one of the following: a reuse probability of the data service task, a complexity of the data service task, or received indication information.

Specifically, the reuse probability of the data service task may be: a reuse probability of the data service task computed based on a frequency of the data service task occurring within a preset time period, or a reuse probability predicted after learning and predicting data service call records by a neural network, which will not be limited in the present disclosure. The preset time period is a time period before a current time period.

The complexity of the data service task may be determined based on the number of target nodes that process the data service task, or based on the number of branches of the data service task, which will not be limited in the present disclosure.

The received indication information may be indicated by an upper layer of the data orchestration node, or may be indicated by the data service node.

In some embodiments, the data orchestration node may also send data service status collection signaling to the data service node to collect the data service task and data service task status corresponding to the data service node, and determine which type of channel-associated processing signaling is selected based on resource utilization of the data service node.

In S805, the data orchestration node generates the channel-associated processing signaling based on the type of channel-associated processing signaling corresponding to the data service task.

In some embodiments, in a case where the data orchestration node determines that the type of channel-associated processing signaling is a first type, the data orchestration node generates the first type of channel-associated processing signaling.

In a case where the data orchestration node determines that the type of channel-associated processing signaling is a second type, the data orchestration node generates the second type of channel-associated processing signaling.

As shown in FIG. 8, in scenario 3, the process of the target node processing the data service task described in S303 above can be implemented through the following S806 to S808.

In S806, the target node updates the channel-associated processing table based on the channel-associated processing signaling.

The channel-associated processing table is used by the target node to store, based on the channel-associated processing signaling, at least one of the following: the data service task identifier, a data source of the data service task, or routing and data service capabilities for processing the data service task.

In some embodiments, after receiving the data packet, the target node firstly parses the data packet to determine whether the data packet includes the second type of channel-associated processing signaling. In a case where the data packet includes the second type of channel-associated processing signaling, the target node processes the data packet according to the manner described in scenario 2. In a case where the data packet does not include the second type of channel-associated processing signaling, the target node determines whether the data packet is a data packet of the data service task or the first type of channel-associated processing signaling.

In a case where the data packet is the data packet of the data service task, the target node looks up a corresponding working field from the channel-associated processing table based on the data service task identifier in the data packet, and processes the data packet based on the corresponding working field.

In a case where the data packet is the first type of channel-associated processing signaling, the target node updates the channel-associated processing table based on the first type of channel-associated processing signaling.

In some implementation manners, the target node updating the channel-associated processing table is that: the target node determines whether a current channel-associated processing table includes a table entry same as the data service task identifier in the channel-associated processing signaling, and updates the table entry based on the channel-associated processing signaling in a case where the table entry is present.

In a case where the table entry is not present, the target node adds a new table entry, and adds relevant information from the channel-associated processing signaling into the new table entry.

In S807, after receiving the data service task, the target node acquires routing and data service capabilities of the target node for processing the data service task corresponding to the data service task identifier from the updated channel-associated processing table.

In S808, the target node processes the data service task based on the routing and data service capabilities of the target node for processing the data service task.

The above provide a detailed description of issuance manners of channel-associated processing signaling in different scenarios involved in the embodiments of the present disclosure, as well as the process of the corresponding target node processing the data service task based on the channel-associated processing signaling.

In the embodiments of the present disclosure, both channel-associated processing signaling and data packets of data service tasks need to be transmitted on bearers between nodes. The data orchestration node may manage bearers in the network before sending the channel-associated processing signaling.

As shown in FIG. 10, the manner of the data orchestration node managing bearers established between the data service nodes may be implemented through the following S1001 to S1007.

In S1001, the data orchestration node sends first bearer establishment indication information to a first node among target nodes. Correspondingly, the first node receives the first bearer establishment indication information from the data orchestration node.

The first node is a target node that does not established a bearer with a second node. The second node is a target node that needs to interact with the first node to process the data service task. The first bearer establishment indication information is used to indicate information of a first port that the first node needs to open.

In some embodiments, the first bearer establishment indication information is further used to indicate at least one of the following: an authentication manner of the first port, or a closing manner of the first port.

The authentication manner is used to indicate an authentication manner for authenticating another node that needs to establish a bearer. For example, when the second node establishes a connection with the first port of the first node, the authentication is performed through a manner such as token authentication connection or mutual authentication connection based on secure socket layer (SSL) key negotiation. The second node is allowed to establish a connection with the first port of the first node after successful authentication.

In some implementation manners, after acquiring the data service task, the data orchestration node determines, based on the data service logic of the data service task, at least one node pair that needs to interact when performing the data service task. The node pair includes two nodes that need to interact with data when processing the data service task. The data orchestration node determines a target node pair in the at least one node pair based on the network topology, and no bearer is established between two nodes of the target node pair. The data orchestration node determines one node in the target node pair as the first node and another node in the target node pair as the second node. Next, the data orchestration node sends the first bearer establishment indication information to the first node.

In S1002, the first node opens the first port in response to the first bearer establishment indication information.

In S1003, the first node sends first bearer establishment confirmation information to the data orchestration node. Correspondingly, the data orchestration node receives the first bearer establishment confirmation information from the first node.

The first bearer establishment confirmation information is used to indicate that the first port has been opened.

In some embodiments, the first bearer establishment confirmation information carries a port identifier of the first port.

In S1004, the data orchestration node sends second bearer establishment indication information to the second node. Correspondingly, the second node receives the second bearer establishment indication information from the data orchestration node.

The second bearer establishment indication information is used to instruct the second node to establish a connection with the first port.

In S1005, the second node establishes a connection with the first port in response to the second bearer establishment indication information.

In some embodiments, the second bearer establishment indication information includes the port identifier of the first port and the authentication manner of the first port.

The second node initiates connection authentication to the first port based on the port identifier of the first port and the authentication manner of the first port, and establishes a connection with the first port after successful authentication.

In S1006, the second node sends second bearer establishment confirmation information to the data orchestration node. Correspondingly, the data orchestration node receives the second bearer establishment confirmation information from the second node.

The second bearer establishment confirmation information is used to indicate that a connection has been established with the first port.

After the data orchestration node receives the first bearer establishment indication information and the second bearer establishment indication information, the data orchestration node determines that the bearer between the first node and the second node has been established. In this case, the data orchestration node updates a bearer record table to record real-time bearer status of the network.

In S1007, the data orchestration node updates the bearer record table based on the second bearer establishment confirmation information.

The bearer record table is used to record information of bearers established between all nodes in the network.

In some embodiments, the bearer record table includes, but is not limited to, sending end, receiving end, port information, and port closing manner.

As an example, with reference to the above S1001 to S1006, the sending end is the first node, the receiving end is the second node, the port information is the first port, and the port closing manner is the closing manner indicated by the first bearer establishment indication information.

In some embodiments, in addition to updating the bearer record table, the data orchestration node may further update the network topology.

The establishment of a bearer between data service nodes requires occupancy of resources of the data service nodes. In order to reduce the occupancy of resources, the embodiments of the present disclosure provide the following two bearer closing manners: manner 1 is that the data service node actively closes the bearer; and manner 2 is that the data orchestration node instructs the service node to close the bearer. Manners 1 and 2 will be described in details below.

### Manner 1: data service node actively closes the bearer

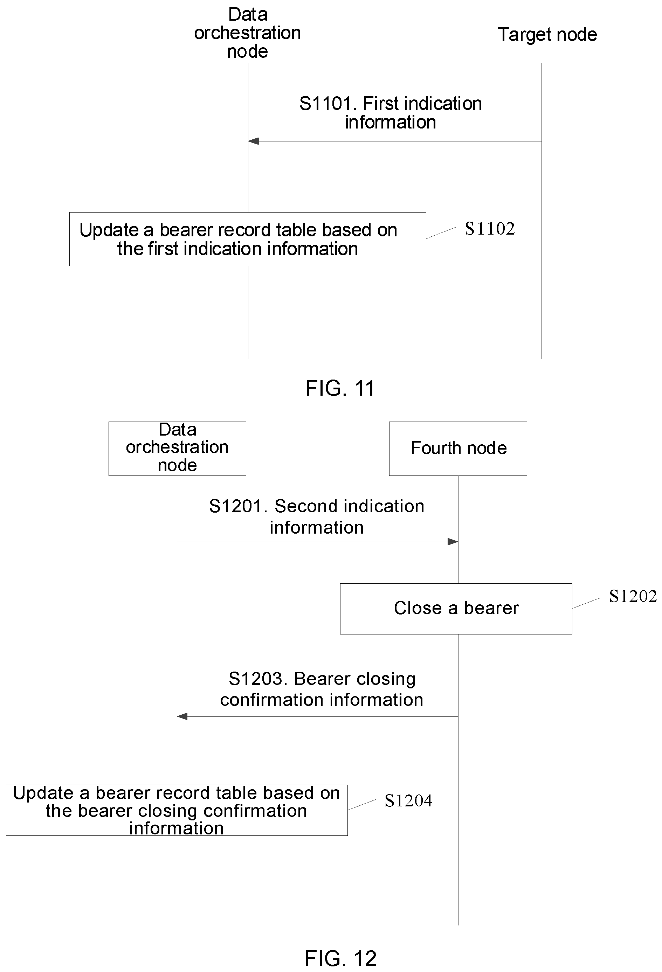

As shown in FIG. 11, a process of the data service node actively closing the bearer includes the following S1101 and S1102.

In S1101, the target node sends first indication information to the data orchestration node. Correspondingly, the data orchestration node receives the first indication information from the target node.

The first indication information is used to indicate that the target node has closed the bearer.

In some embodiments, the target node sends the first indication information in a case where a second preset condition is satisfied.

As an example, the second preset condition includes at least one of the following: connection establishment time of the bearer of the target node being greater than or equal to third preset time, or idle time of the bearer of the target node being greater than or equal to fourth preset time.

As an implementation manner, the target node determines that the closing manner indicated by the first bearer establishment indication information is automatic port closing, and monitors these ports in real time.

In a case where the target node detects a port that satisfies the second preset condition, the target node closes the bearer of the port, and sends the first indication information to the data orchestration node to indicate that the bearer has been closed.

In S1102, the data orchestration node updates the bearer record table based on the first indication information.

The bearer record table is used to record information of bearers established between all nodes in the network.

In some embodiments, in addition to updating the bearer record table, the data orchestration node may further update the network topology.

### Manner 2: the data orchestration node instructs the service node to close the bearer.

As shown in FIG. 12, a process of the data orchestration node instructing the service node to close the bearer includes the following S1201 to S1204.

In S1201, the data orchestration node sends second indication information to a fourth node. Correspondingly, the fourth node receives the second indication information from the data orchestration node.

The second indication information is used to instruct the fourth node to close the bearer. The fourth node is one target node among the target nodes.

In some embodiments, the data orchestration node sends the second indication information to the fourth node in a case where a first preset condition is satisfied.

As an example, the first preset condition includes at least one of the following: connection establishment time of the bearer of the target node being greater than or equal to first preset time, or idle time of the bearer of the target node being greater than or equal to second preset time.

As an implementation manner, the data orchestration node determines a bearer that need to be closed and queries the bearer record table to determine bearer information of the bearer. The bearer information includes port information of a sending end (i.e., a fourth node) of the bearer. The data orchestration node sends the second indication information to the fourth node.

In S1202, the fourth node closes the bearer in response to the second indication information.

In S1203, the fourth node sends bearer closing confirmation information to the data orchestration node. Correspondingly, the data orchestration node receives the bearer closing confirmation information from the fourth node.

The bearer closing confirmation information is used to indicate that the fourth node has closed the bearer.

In some embodiments, the bearer closing confirmation information includes port information for the closing.

In S1204, the data orchestration node updates the bearer record table based on the bearer closing confirmation information.

The bearer record table is used to record information of bearers established between all nodes in the network.

In some embodiments, in addition to updating the bearer record table, the data orchestration node may further update the network topology.

The above describes the related content of bearer management involved in the embodiments of the present disclosure.

In the embodiments of the present disclosure, the data orchestration node orchestrating the data service logic of the data service task, establishing the bearer, and issuing the channel-associated processing signaling are all implemented based on the network topology. Therefore, the embodiments of the present disclosure provide a process of constructing the network topology.

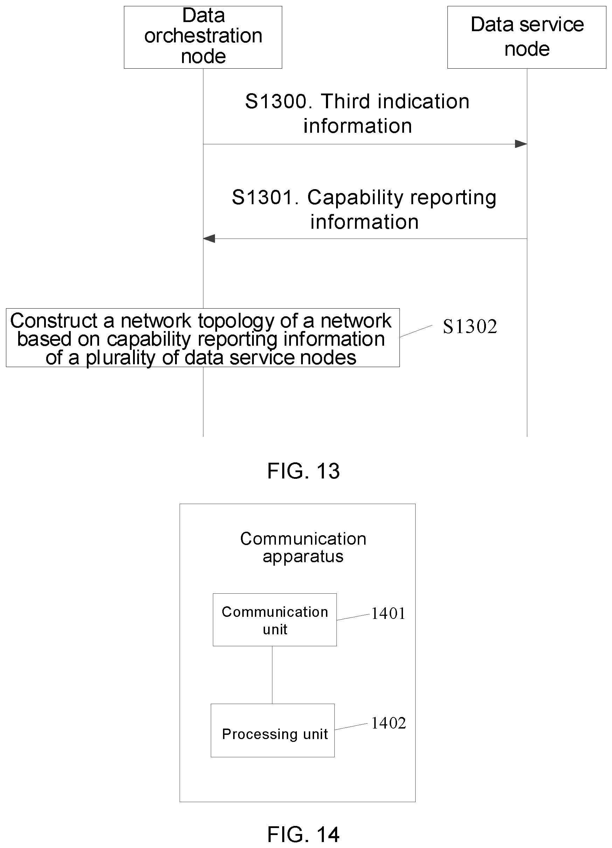

As shown in FIG. 13, the process of constructing the network topology provided in the embodiments of the present disclosure may be implemented through the following S1301 to S1302, which will be described in detail below.

In S1301, the target node sends capability reporting information to the data orchestration node. Correspondingly, the data orchestration node receives capability reporting information from a plurality of data service nodes in the network.

The capability reporting information includes at least one of the following: node identifier, node type, node data service capability, or node bearer information.

The node identifier is used to identify the data service node. For example, the node identifier may be an Internet protocol (IP) address of the data service node, a unique user identification (UID) of the data service node, or a character string of the data service node.

The node type is used to indicate a classification of the data service node. For example, the data service node is a terminal, a base station, a core network device, etc.

The node data service capability is used to record the data service capabilities of the node, such as whether the node has forwarding capability, and/or maximum forwarding capacity; whether the node has data acquisition capability, and/or a type of data that can be acquired; whether the node has preprocessing capability, and/or processor parameters; whether the node has storage capability, and/or maximum storage capacity and database format; and whether the node has analysis capability, and/or processor parameters and memory parameters. As an example, the target node may carry the data service capabilities of the node through a capability matrix.

The node bearer information is used to record information such as the bearer of the node, and identifiers of nodes adjacent to the node.

In S1302, the data orchestration node constructs the network topology of the network based on the capability reporting information of the plurality of data service nodes.

The network topology includes bearer information of the data service nodes in the network, and data service capabilities of each data service node.

As an embodiment, in a case where topology information of the data service nodes is present in the current network topology, the data orchestration node updates the topology information of the data service nodes in the current network topology based on the capability reporting information of the data service nodes.

In a case where the topology information of the data service nodes is not present in the current network topology, the data orchestration node adds the topology information of the data service nodes to the current network topology based on the capability reporting information of the data service nodes.

The data orchestration node may construct the network topology and a capability topology separately. The network topology is used to indicate a structure of the network and connections between the nodes. The capability topology is used to indicate capability relationships between the nodes.

The data orchestration node may construct only the network topology, and the network topology indicates the structure of the network, connections between the nodes, and the capability relationships between the nodes.

As an example, the network topology and/or the capability topology may be represented by adjacency matrices, association matrices, multi-chains, etc.

It should be noted that, in the embodiments of the present disclosure, the process of constructing the topology may be initiated by the data orchestration node or the data service node.

In a case where the data orchestration node initiates the process of constructing the topology, as shown in FIG. 13, the process further includes S1300.

S1300, the data orchestration node sends third indication information to a plurality of data service nodes. Correspondingly, the plurality of data service nodes receive the third indication information from the data orchestration node.

The third indication information is used to instruct the data service node to report capability information.

The data service node sends the capability reporting information to the data orchestration node in response to the third indication information. Correspondingly, the data orchestration node receives the capability reporting information from the data service node.

The third instruction information may include an identifier of the data orchestration node and a requirement for the capability information reported by the data service node.

The identifier of the data orchestration node may be an IP address of the data orchestration node, a unique UID of the data orchestration node, or a character string of the data orchestration node. The requirement for the capability information reported by the data service node is used to indicate a manner for the data service node reporting the capability information, such as reporting incremental information or reporting full information.

As an example, in a case where the data orchestration node initially accesses the network or the data orchestration node periodically updates and maintains the network topology, the data orchestration node initiates the process of constructing the topology.

In a case where the data service node initiates the process of constructing the topology, the data service node directly sends the capability reporting information to the data orchestration node.

As an example, in a case where the data service node initially accesses the network or the functionality of the data service node is updated, the topology is updated by initiation of the data service node.

It can be understood that, in order to implement the communication method, the communication apparatus includes corresponding hardware structures and/or software modules for implementing various functions. Those skilled in the art should easily realize that, the present disclosure may be implemented in the form of hardware or a combination of hardware and computer software with reference to exemplary algorithm steps described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above-mentioned method embodiments in the embodiments of the present disclosure. For example, each function may correspond to a separate functional module, or two or more functions may be integrated into a single functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 14 is a structural schematic diagram of a communication apparatus provided in the embodiments of the present disclosure. The communication apparatus may perform the method related to the data orchestration node in the data sending provided in the above method embodiments. As shown in FIG. 14, the communication apparatus includes a communication unit 1401 and a processing unit 1402.

The processing unit 1402 is configured to instruct the communication unit 1401 to acquire a data service task.

The processing unit 1402 is further configured to instruct the communication unit 1401 to send channel-associated processing signaling to target nodes. The target nodes are data service nodes that perform the data service task. The channel-associated processing signaling is used to indicate routing and data service capabilities of the target nodes for processing the data service task.

In some embodiments, the channel-associated processing signaling includes first type of channel-associated processing signaling and second type of channel-associated processing signaling. The first type of channel-associated processing signaling is used to indicate routing and data service capabilities of a single target node for processing the data service task. The second type of channel-associated processing signaling is used to indicate routing and data service capabilities of each target node of a plurality of target nodes for processing the data service task.

In some embodiments, the processing unit 1402 is configured to instruct the communication unit 1401 to send corresponding first type of channel-associated processing signaling to each target node.

In some embodiments, the processing unit 1402 is configured to instruct the communication unit 1401 to send the second type of channel-associated processing signaling to a head node among the plurality of target nodes; and the head node is a target node that processes the data service task first.

In some embodiments, the second type of channel-associated processing signaling is integrated into a data packet of the data service task.

In some embodiments, the second type of channel-associated processing signaling includes a plurality of layers of fields; one layer of fields corresponds to one target node; and each layer of fields is used to indicate routing and data service capabilities of a corresponding target node for processing the data service task.

In some embodiments, the processing unit 1402 is further configured to: determine a type of channel-associated processing signaling corresponding to the data service task; and generate the channel-associated processing signaling based on the type of the channel-associated processing signaling corresponding to the data service task.

In some embodiments, the type of the channel-associated processing signaling corresponding to the data service task is determined based on any one of the following: reuse probability of the data service task, complexity of the data service task, or received indication information.

In some embodiments, the communication unit 1401 is further configured to: send channel-associated processing table establishment indication information to the target nodes, where the channel-associated processing table establishment indication information is used to indicate establishment of a channel-associated processing table, the channel-associated processing table is used by the target node to store, based on the channel-associated processing signaling, at least one of the following: a data service task identifier, a data source of the data service task, or routing and data service capabilities for processing the data service task; and receive channel-associated processing table establishment completion information, the channel-associated processing table establishment completion information being used to indicate that the target node has established the channel-associated processing table.

In some embodiments, the communication unit 1401 is further configured to: send first bearer establishment indication information to a first node among the target nodes, where the first node is a target node that does not establish a bearer with a second node, the second node is a target node that needs to interact with the first node to process the data service task, and the first bearer establishment indication information is used to indicate information of a first port that the first node needs to open.

In some embodiments, the first bearer establishment indication information is further used to indicate at least one of the following: an authentication manner of the first port; or a closing manner of the first port.

In some embodiments, the communication unit 1401 is further configured to: receive first bearer establishment confirmation information from the first node, the first bearer establishment confirmation information being used to indicate that the first node has opened the first port; and second bearer establishment indication information to the second node, the second bearer establishment indication information being used to instruct the second node to establish a connection with the first port.

In some embodiments, the communication unit 1401 is further configured to receive second bearer establishment confirmation information from the second node, the second bearer establishment confirmation information being used to indicate that the second node has established the connection with the first port. The processing unit 1402 is further configured to: update a bearer record table based on the second bearer establishment confirmation information, the bearer record table being used to record information of bearers established between all nodes in a network.

In some embodiments, the processing unit 1402 is further configured to: determine at least one node pair, where a node pair includes two nodes that need to interact data when processing the data service task; determine a target node pair in the at least one node pair based on a network topology, where no bearer is established between two nodes of the target node pair; and determine one node in the target node pair as the first node and another node in the target node pair as the second node.

In some embodiments, the communication unit 1401 is further configured to: first indication information, where the first indication information is used to indicate that a third node has closed a bearer, and the third node is one target node among the target nodes. The processing unit 1402 is further configured to update a bearer record table based on the first indication information, the bearer record table being used to record information of bearers established between all nodes in a network.

In some embodiments, the communication unit 1401 is further configured to: send second indication information to a fourth node, where the second indication information is used to instruct the fourth node to close a bearer, and the fourth node is one target node among the target nodes; receive bearer closing confirmation information from the fourth node, the bearer closing confirmation information being used to indicate that the fourth node has closed the bearer. The processing unit 1402 is further configured to update a bearer record table based on the bearer closing confirmation information, the bearer record table being used to record information of bearers established between all nodes in a network.

In some embodiments, the processing unit 1402 is further configured to instruct the communication unit 1401 to send the second indication information to the fourth node in a case where a first preset condition is satisfied. The first preset condition includes at least one of the following: connection establishment time of the bearer of the fourth node being greater than or equal to first preset time, or idle time of the bearer of the fourth node being greater than or equal to second preset time.

In some embodiments, the communication unit 1401 is further configured to: receive capability reporting information from a plurality of data service nodes in a network, the capability reporting information including at least one of the following: node identifier, node type, node data service capability, or node bearer information. The processing unit 1402 is further configured to construct a network topology of the network based on the capability reporting information of the plurality of data service nodes, the network topology including: bearer information of the data service nodes in the network, and data service capabilities of each data service node.

In some embodiments, the communication unit 1401 is further configured to send third indication information to the plurality of data service nodes, the third indication information being used to instruct the data service nodes to report capability information.

In some embodiments, the communication unit 1401 is further configured to receive the capability reporting information from the data service nodes. The processing unit 1402 is further configured to: in a case where topology information of the data service nodes is present in a current network topology, update the topology information of the data service nodes in the current network topology based on the capability reporting information of the data service nodes.

In some embodiments, the processing unit 1402 is further configured to: in a case where the topology information of the data service nodes is not present in the current network topology, add the topology information of the data service nodes to the current network topology based on the capability reporting information of the data service nodes.

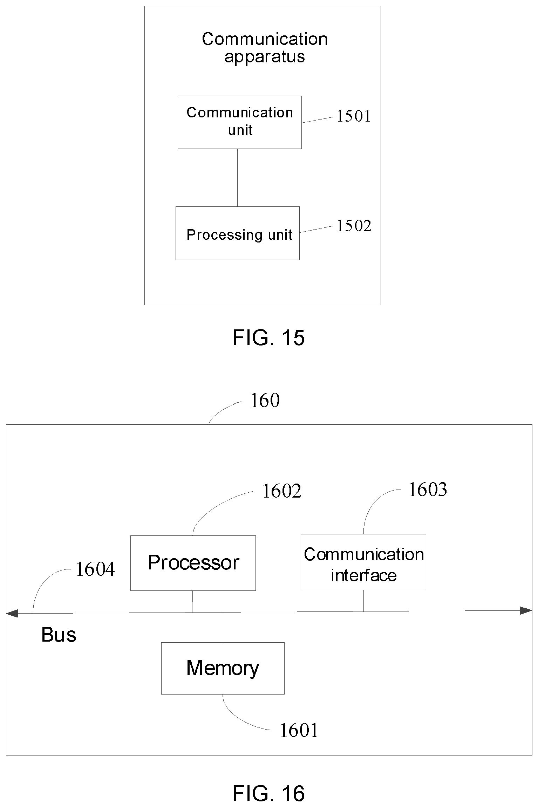

FIG. 15 is a structural schematic diagram of another communication apparatus provided in the embodiments of the present disclosure. The communication apparatus may perform the method related to the target node in the data sending provided in the above method embodiments. As shown in FIG. 15, the communication apparatus includes a communication unit 1501 and a processing unit 1502.

The communication unit 1501 is configured to receive channel-associated processing signaling, the channel-associated processing signaling being used to indicate routing and data service capabilities of the target node for processing a data service task.

The processing unit 1502 is configured to process the data service task based on the routing and data service capabilities for processing the data service task indicated by the channel-associated processing signaling.

In some embodiments, the processing unit 1502 is configured to: determine a previous hop node and a next hop node of the target node based on the routing and data service capabilities for processing the data service task indicated by the channel-associated processing signaling; monitor a data packet of the data service task sent by the previous hop node; process the data packet of the data service task based on the data service capabilities indicated by the channel-associated processing signaling; and instruct the communication unit 1501 to forward the processed data packet of the data service task to the next-hop node.

In some embodiments, the processing unit 1502 is configured to: update a channel-associated processing table based on the channel-associated processing signaling, where the channel-associated processing table is used by the target node to store, based on the channel-associated processing signaling, at least one of the following: a data service task identifier, a data source of the data service task, or routing and data service capabilities for processing the data service task; acquire the routing and data service capabilities of the target node for processing the data service task corresponding to the data service task identifier from the updated channel-associated processing table after receiving the data service task; and process the data service task based on the routing and data service capabilities of the target node for processing the data service task.

In some embodiments, the communication unit 1501 is further configured to receive channel-associated processing table establishment indication information, the channel-associated processing table establishment indication information being used to indicate establishment of the channel-associated processing table. The processing unit 1502 is further configured to establishing the channel-associated processing table in response to the channel-associated processing table establishment indication information. The communication unit 1501 is further configured to send channel-associated processing table establishment completion information, the channel-associated processing table establishment completion information being used to indicate that the target node has established the channel-associated processing table.

In some embodiments, the communication unit 1501 is further configured to receive first bearer establishment indication information, the first bearer establishment indication information being used to indicate information of a first port that needs to be opened. The processing unit 1502 is further configured to open the first port in response to the first bearer establishment indication information. The communication unit 1501 is further configured to send first bearer establishment confirmation information, the first bearer establishment confirmation information being used to indicate that the first port has been opened.

In some embodiments, the first bearer establishment indication information is further used to indicate at least one of the following: an authentication manner of the first port; or a closing manner of the first port.

In some embodiments, the communication unit 1501 is further configured to receive second bearer establishment indication information, the second bearer establishment indication information being used to indicate establishment of a connection with the first port. The processing unit 1502 is further configured to establish the connection with the first port in response to the second bearer establishment indication information. The communication unit 1501 is further configured to send the second bearer establishment indication information, the second bearer establishment indication information being used to indicate that the connection has been established with the first port.

In some embodiments, the communication unit 1501 is further configured to send first indication information, the first indication information being used to indicate that the target node has closed a bearer.

In some embodiments, the processing unit 1502 is configured to instruct the communication unit 1501 to send the first indication information in a case where a second preset condition is satisfied, the second preset condition including at least one of the following: connection establishment time of the bearer of the target node being greater than or equal to third preset time, or idle time of the bearer of the target node being greater than or equal to fourth preset time.

In some embodiments, the communication unit 1501 is further configured to receive second indication information, the second indication information being used to indicate closing of the bearer. The processing unit 1502 is further configured to close the bearer in response to the second indication information. The communication unit 1501 is further configured to send bearer closing confirmation information, the bearer closing confirmation information being used to indicate that the bearer has been closed.

In some embodiments, the communication unit 1501 is further configured to send capability reporting information, the capability reporting information including: node identifier, node data service capability, and node bearer information.

In some embodiments, the communication unit 1501 is further configured to receive third indication information, the third indication information being used to instruct a data service node to report capability information.

The processing unit 1502 is further configured to instruct the communication unit 1501 to send the capability reporting information in response to the third indication information.

In a case where the functions of the above integrated modules are implemented in the form of hardware, the embodiments of the present disclosure provide another structure of the communication apparatus involved in the above embodiments. As shown in FIG. 16, the communication apparatus 160 includes a memory 1601, a processor 1602, a communication interface 1603, and a bus 1604.

The memory 1601 may be a read-only memory (ROM) or a static storage device of any other type capable of storing static information and instructions, or a random access memory (RAM) or a dynamic storage device of any other type capable of storing dynamic information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

The processor 1602 may implement or perform various exemplary logical blocks, modules and circuits described with reference to the embodiments of the present disclosure. The processor 1602 may be a central processor, a general-purpose processor, a digital signal processor, an application specific integrated circuit, a field programmable gate array or other programmable logic components, a transistor logic component, a hardware assembly, or any combination thereof. The processor 1602 may implement or perform various exemplary logical blocks, modules and circuits described with reference to the embodiments of the present disclosure. The processor 1602 may also be a combination that implements computing functions, for example, including a combination of one or more microprocessors, a combination of a digital signal processor (DSP) and a microprocessor, or the like.

The communication interface 1603 is configured to connect with other devices via a communication network. The communication network may be Ethernet, a wireless access network, a wireless local area network (WLAN), or the like.

In some embodiments, the memory 1601 may be independent of the processor 1602, and the memory 1601 may be connected to the processor 1602 via the bus 1604, and is configured to store instructions or program codes. When the processor 1602 calls and executes the instructions or program codes stored in the memory 1601, the processor 1602 can implement the data sending provided in the embodiments of the present disclosure.

In some embodiments, the memory 1601 may also be integrated with the processor 1602.

The bus 1604 may be an extended industry standard architecture (EISA) bus, or the like. The bus 1604 may be classified as an address bus, a data bus, a control bus, or the like. For ease of representation, only one bold line is used in FIG. 16 for representing the bus 1604, but it does not mean that there is only one bus or one type of bus.

Some embodiments of the present disclosure provide a computer-readable storage medium (for example, a non-transitory computer-readable storage medium). The computer-readable storage medium has stored computer program instructions thereon, and the computer program instructions, when executed on a computer, cause the computer to perform the data sending as described in any one of the above embodiments.

For example, the computer-readable storage medium may include, but is not limited to: a magnetic storage device (e.g., a hard disk, a floppy disk or a magnetic tape), an optical disk (e.g., a compact disk (CD) or a digital versatile disk (DVD)), a smart card and a flash memory (e.g., an erasable programmable read-only memory (EPROM), a card, a stick or a key driver). The various computer-readable storage media described in the present disclosure may represent one or more devices and/or other machine-readable storage media for storing information. The term "machine-readable storage medium" includes, but is not limited to, a wireless channel and various other media capable of storing, containing, and/or carrying instructions and/or data.

The embodiments of the present disclosure provide a computer program product including instructions. The computer program product, when run on a computer, causes the computer to perform the data sending as described in any one of the above embodiments.

The foregoing descriptions are merely specific implements of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A data sending method, applied to a data orchestration node, the method comprising:
acquiring a data service task; and
sending channel-associated processing signaling to target nodes, wherein the target nodes are data service nodes that perform the data service task, and the channel-associated processing signaling is used to indicate routing and data service capabilities of the target nodes for processing the data service task.

2. The method according to claim 1, wherein the channel-associated processing signaling comprises first type of channel-associated processing signaling and second type of channel-associated processing signaling;
the first type of channel-associated processing signaling is used to indicate routing and data service capabilities of a single target node for processing the data service task;
the second type of channel-associated processing signaling is used to indicate routing and data service capabilities of each target node of a plurality of target nodes for processing the data service task.

3. The method according to claim 2, wherein sending the channel-associated processing signaling to the target nodes comprises:
sending corresponding first type of channel-associated processing signaling to each target node.

4. The method according to claim 2, wherein sending the channel-associated processing signaling to the target nodes comprises:
sending the second type of channel-associated processing signaling to a head node among the plurality of target nodes, the head node being a target node that processes the data service task first.

5. The method according to claim 4, wherein the second type of channel-associated processing signaling is integrated into a data packet of the data service task.

6. The method according to claim 5, wherein the second type of channel-associated processing signaling comprises a plurality of layers of fields, wherein one layer of fields corresponds to one target node, and each layer of fields is used to indicate routing and data service capabilities of a corresponding target node for processing the data service task.

7. The method according to claim 2, wherein before sending the channel-associated processing signaling to the target nodes, the method further comprises:
determining a type of the channel-associated processing signaling corresponding to the data service task; and
generating the channel-associated processing signaling based on the type of the channel-associated processing signaling corresponding to the data service task.

8. The method according to claim 7, wherein the type of the channel-associated processing signaling corresponding to the data service task is determined based on any one of:
reuse probability of the data service task;
complexity of the data service task; or
received indication information.

9. The method according to claim 7 or 8, wherein before determining the type of channel-associated processing signaling for the data service task, the method further comprises:
sending channel-associated processing table establishment indication information to the target nodes, wherein the channel-associated processing table establishment indication information is used to indicate establishment of a channel-associated processing table, the channel-associated processing table is used by the target node to store, based on the channel-associated processing signaling, at least one of: a data service task identifier, a data source of the data service task, or routing and data service capabilities for processing the data service task; and
receiving channel-associated processing table establishment completion information, the channel-associated processing table establishment completion information being used to indicate that the target node has established the channel-associated processing table.

10. The method according to claim 1, wherein before sending the channel-associated processing signaling to the target nodes, the method further comprises:
sending first bearer establishment indication information to a first node among the target nodes, wherein the first node is a target node that does not establish a bearer with a second node, the second node is a target node that needs to interact with the first node to process the data service task, and the first bearer establishment indication information is used to indicate information of a first port that the first node needs to open.

11. The method according to claim 10, wherein the first bearer establishment indication information is further used to indicate at least one of:
an authentication manner of the first port; or
a closing manner of the first port.

12. The method according to claim 10, wherein after sending the first bearer establishment indication information to the first node among the target nodes, the method further comprises:
receiving first bearer establishment confirmation information from the first node, the first bearer establishment confirmation information being used to indicate that the first node has opened the first port; and
sending second bearer establishment indication information to the second node, the second bearer establishment indication information being used to instruct the second node to establish a connection with the first port.

13. The method according to claim 12, wherein after sending the second bearer establishment indication information to the second node, the method further comprises:
receiving second bearer establishment confirmation information from the second node, the second bearer establishment confirmation information being used to indicate that the second node has established the connection with the first port; and
updating a bearer record table based on the second bearer establishment confirmation information, the bearer record table being used to record information of bearers established between all nodes in a network.

14. The method according to any one of claims 10 to 13, wherein before sending the first bearer establishment indication information to the first node among the target nodes, the method further comprises:
determining at least one node pair, wherein a node pair comprises two nodes that need to interact data when processing the data service task;
determining a target node pair in the at least one node pair based on a network topology, wherein no bearer is established between two nodes of the target node pair; and
determining one node in the target node pair as the first node and another node in the target node pair as the second node.

15. The method according to claim 1, further comprising:
receiving first indication information, wherein the first indication information is used to indicate that a third node has closed a bearer, and the third node is one target node among the target nodes;
updating a bearer record table based on the first indication information, the bearer record table being used to record information of bearers established between all nodes in a network.

16. The method according to claim 1, further comprising:
sending second indication information to a fourth node, wherein the second indication information is used to instruct the fourth node to close a bearer, and the fourth node is one target node among the target nodes;
receiving bearer closing confirmation information from the fourth node, the bearer closing confirmation information being used to indicate that the fourth node has closed the bearer; and
updating a bearer record table based on the bearer closing confirmation information, the bearer record table being used to record information of bearers established between all nodes in a network.

17. The method according to claim 16, wherein sending the second indication information to the fourth node comprises:
sending the second indication information to the fourth node in a case where a first preset condition is satisfied, wherein the first preset condition comprises at least one of: connection establishment time of the bearer of the fourth node being greater than or equal to first preset time, or idle time of the bearer of the fourth node being greater than or equal to second preset time.

18. The method according to claim 1, further comprising:
receiving capability reporting information from a plurality of data service nodes in a network, the capability reporting information comprising at least one of: node identifier, node type, node data service capability, or node bearer information;
constructing a network topology of the network based on the capability reporting information of the plurality of data service nodes, the network topology comprising: bearer information of the data service nodes in the network, and data service capabilities of each data service node.

19. The method according to claim 18, wherein before receiving the capability reporting information from the plurality of data service nodes in the network, the method further comprises:
sending third indication information to the plurality of data service nodes, the third indication information being used to instruct the data service nodes to report capability information.

20. The method according to claim 19, further comprising:
receiving the capability reporting information from the data service nodes; and
in a case where topology information of the data service nodes is present in a current network topology, updating the topology information of the data service nodes in the current network topology based on the capability reporting information of the data service nodes.

21. The method according to claim 20, further comprising:
in a case where the topology information of the data service nodes is not present in the current network topology, adding the topology information of the data service nodes to the current network topology based on the capability reporting information of the data service nodes.

22. A data sending method, applied to a target node, the method comprising:
receiving channel-associated processing signaling, the channel-associated processing signaling being used to indicate routing and data service capabilities of the target node for processing a data service task; and
processing the data service task based on the routing and data service capabilities for processing the data service task indicated by the channel-associated processing signaling.

23. The method according to claim 22, wherein processing the data service task based on the routing and data service capabilities for processing the data service task indicated by the channel-associated processing signaling comprises:
determining a previous hop node and a next hop node of the target node based on the routing and data service capabilities for processing the data service task indicated by the channel-associated processing signaling;
monitoring a data packet of the data service task sent by the previous hop node;
processing the data packet of the data service task based on the data service capabilities indicated by the channel-associated processing signaling; and
forwarding the processed data packet of the data service task to the next-hop node.

24. The method according to claim 22, wherein processing the data service task based on the routing and data service capabilities for processing the data service task indicated by the channel-associated processing signaling comprises:
updating a channel-associated processing table based on the channel-associated processing signaling, wherein the channel-associated processing table is used by the target node to store, based on the channel-associated processing signaling, at least one of: a data service task identifier, a data source of the data service task, or routing and data service capabilities for processing the data service task;
after receiving the data service task, acquiring the routing and data service capabilities of the target node for processing the data service task corresponding to the data service task identifier from the updated channel-associated processing table; and
processing the data service task based on the routing and data service capabilities of the target node for processing the data service task.

25. The method according to claim 24, wherein before updating the channel-associated processing table based on the channel-associated processing signaling, the method further comprises:
receiving channel-associated processing table establishment indication information, the channel-associated processing table establishment indication information being used to indicate establishment of the channel-associated processing table;
establishing the channel-associated processing table in response to the channel-associated processing table establishment indication information; and
sending channel-associated processing table establishment completion information, the channel-associated processing table establishment completion information being used to indicate that the target node has established the channel-associated processing table.

26. The method according to claim 22, wherein before receiving the channel-associated processing signaling, the method further comprises:
receiving first bearer establishment indication information, the first bearer establishment indication information being used to indicate information of a first port that needs to be opened;
opening the first port in response to the first bearer establishment indication information; and
sending first bearer establishment confirmation information, the first bearer establishment confirmation information being used to indicate that the first port has been opened.

27. The method according to claim 26, wherein the first bearer establishment indication information is further used to indicate at least one of:
an authentication manner of the first port; or
a closing manner of the first port.

28. The method according to claim 22, wherein before receiving the channel-associated processing signaling, the method further comprises:
receiving second bearer establishment indication information, the second bearer establishment indication information being used to indicate establishment of a connection with the first port;
establishing the connection with the first port in response to the second bearer establishment indication information; and
sending the second bearer establishment indication information, the second bearer establishment indication information being used to indicate that the connection has been established with the first port.

29. The method according to claim 22, further comprising:
sending first indication information, the first indication information being used to indicate that the target node has closed a bearer.

30. The method according to claim 29, wherein sending the first indication information, comprises:
sending the first indication information in a case where a second preset condition is satisfied, the second preset condition comprising at least one of: connection establishment time of the bearer of the target node being greater than or equal to third preset time, or idle time of the bearer of the target node being greater than or equal to fourth preset time.

31. The method according to claim 22, further comprising:
receiving second indication information, the second indication information being used to indicate closing of the bearer;
closing the bearer in response to the second indication information; and
sending bearer closing confirmation information, the bearer closing confirmation information being used to indicate that the bearer has been closed.

32. The method according to claim 22, further comprising:
sending capability reporting information, the capability reporting information comprising: node identifier, node data service capability, and node bearer information.

33. The method according to claim 32, wherein sending the capability reporting information comprises:
receiving third indication information, the third indication information being used to instruct a data service node to report capability information; and
sending the capability reporting information in response to the third indication information.

34. A communication system, comprising: a data orchestration node and a target node, wherein
the data orchestration node is configured to: acquire a data service task and send channel-associated processing signaling to the target node;
the target node is a data service node that performs the data service task, and the channel-associated processing signaling is used to indicate routing and data service capabilities of the target node for processing the data service task;
the target node is configured to: receive the channel-associated processing signaling; and process the data service task based on the routing and data service capabilities for processing the data service task indicated by the channel-associated processing signaling.

35. A communication apparatus, comprising a memory and a processor, the memory being coupled to the processor, wherein the memory is configured to store instructions executable by the processor, and the processor, when executing the instructions, performs the method according to any one of claims 1 to 33.

36. A computer-readable storage medium, wherein the computer-readable storage medium has stored computer instructions thereon, and the computer instructions, when being executed by a computer, cause the computer to perform the method according to any one of claims 1 to 33.
